# EUROPEAN PATENT SPECIFICATION

(11) **EP 2 962 570 B1**
(45) Date of publication and mention of the grant of the patent: **13.09.2017**
(21) Application number: 15174975.1
(22) Date of filing: 02.07.2015
(51) Int. Cl.: A21C 11/00

(54) **APPARATUS FOR FORMING DISK-SHAPED ELEMENTS OF FOOD DOUGH**
VORRICHTUNG ZUM FORMEN VON SCHEIBENFÖRMIGEN ELEMENTEN AUS TEIG
DISPOSIF DE FAÇONNAGE D'ÉLÉMENTS DE PÂTE ALIMENTAIRE EN FORME DE DISQUES

(30) Priority: 02.07.2014 IT VI20140170
(43) Date of publication of application: 06.01.2016
(73) Proprietor: ITECA Impianti Tecnologici Alimentari Speciali S.P.A., 37050 Palu' (VR) (IT)
(72) Inventor: BENETTI, Luigi, 37050 PALU' (VR) (IT); ECCHER, Luciano, 36050 PALU' (VR) (IT); BRUN, Renato, 36050 PALU' (VR) (IT)
(74) Representative: Autuori, Angelo

(56) References cited:
- EP-A2- 0 904 696
- US-A- 3 190 758
- US-A- 3 392 687

## Description

### Field of the Invention

The present invention is generally applicable to the field of food industry, and it particularly relates to an apparatus for forming disk-shaped elements of food dough, such as bases for pizza.

### Background of the Invention

Processes are known for preparing food dough, such as food dough for pizza, which provide for a first mixing phase of the ingredients to form a dough and a second phase wherein the obtained dough is left to rise in special cells. Then, the leavened dough is subsequently processed to obtain a disk-shaped element, which constitutes the base for pizza.

To the object, industrial lines are known which press, form and calibrate the food dough to obtain the final disk-shaped element. The European patent EP2164334 shows an example of such known lines.

Generally, the forming is accomplished by means of apparatuses that include one or more pairs of pressing rollers. In such apparatuses, the portion of food dough coming from the press passes several times through the two counter-rotating rollers, so as to spread the dough and to form the disk-shaped element of food dough.

Therefore, these apparatuses form the food dough by mechanic processing thereof. It is known how this operation induces mechanical stress in the food dough that compromise the quality of the final product, by considerably reducing its softness and, consequently, its desirability for the consumer.

To try to overcome these drawbacks, an apparatus for forming has been developed having a plurality of idle cones fixed to a metal load-bearing frame. The forming cones are arranged radially with the tip directed towards the centre identified by the axis of rotation of the load-bearing frame. From the international application EP1889541 an example of such known apparatus of forming is known.

Once the portion of food dough is arranged on a working surface, the load-bearing frame lowers until moving the cones in contact engage with the portion of food dough. Then, the load-bearing frame rotates, driving the cones on the food dough to spread thereof.

However, such a solution has the drawback of trailing the food dough during its forming, thus generating stress therein.

From EP0904696 an apparatus is known having all the features of the preamble of the independent claim 1.

From US3392687 and US3190758 other apparatuses are known for forming disk-shaped elements of food dough.

### Summary of the Invention

Object of the present invention is to at least partially overcome the above mentioned drawbacks by providing an apparatus for forming disk-shaped elements of food dough having features of greater efficacy and relative cheapness.

Another object of the invention is to provide an apparatus for forming disk-shaped elements of food dough that minimizes the mechanic stress on the food dough.

These objects, as well as other which will appear more clearly hereinafter are fulfilled by an apparatus for forming disk-shaped elements of food dough in accordance with claim 1.

Advantageous embodiments of the invention are defined in accordance with the appended claims.

### Brief description of the drawings

Further features and advantages of the invention will appear more evident upon reading the detailed description of a preferred but not exclusive embodiment of an apparatus for forming disk-shaped elements of food dough according to the invention, shown as non limitative example with the help of the annexed drawings wherein:

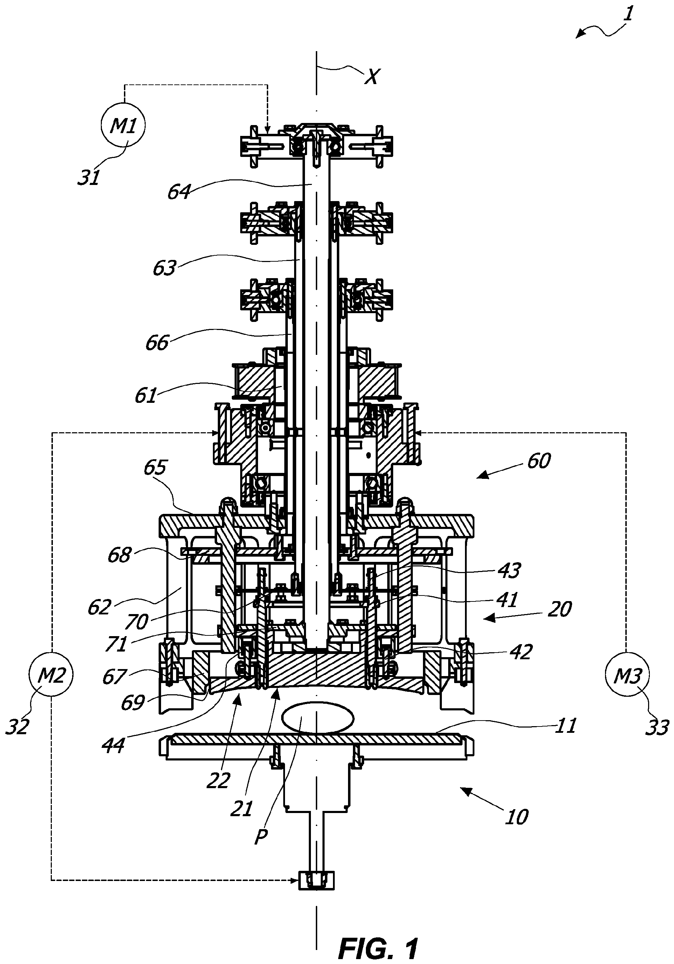

**FIG. 1** is a section view of the apparatus for forming the element of food dough **1;**
**FIGs. 2** to **9** are section views of some details of the apparatus **1,** during various preparing phases on the food dough.

### Detailed description of some preferred embodiments

With reference to the above mentioned drawings, it is described an apparatus **1** for forming disk-shaped elements **D** of food dough starting from a generally spheroidal portion **P.** More particularly, the apparatus **1** allows to thin and spread the portion of food dough **P,** until it assumes a generally disk shape. The latter are usable, for example, as bases for pizza.

Suitably, the apparatus **1** may be inserted in a production line for the production of bakery products, such as pizzas.

In a *per se* known manner, such a line may include a section of dough of the ingredients, a section of leavening of the dough, a section of preparing of the leavened dough to make it assume the desired shape and a section of baking of the processed dough.

The apparatus **1** may be inserted in the section of preparing of the leavened dough. In case the line is a line of production of pizzas, such as the line known from the European Patent EP2164334, the apparatus **1** may be used to process the portion of food dough exiting from the leavening cell, in order to prepare bases for pizza to be sent to the following sections of stuffing and baking.

Due to its particular features, at the upstream of the apparatus **1** there is no need of pressing stations, to avoid stressing mechanically the food dough. Moreover, at downstream thereof, a station of calibration may or may not be provided.

The apparatus **1** may comprise a base member **10** having an upper surface **11** for supporting a portion **P** of food dough to be formed.

In particular, the base member **10** may for example include a substantially flat disk having a diameter sufficient to contain the disk-shaped element **D** of food dough.

Furthermore, the apparatus **1** may comprise a working member **20** having a lower surface **21** faced to the upper surface **11** of the base member **10** and coaxial therewith.

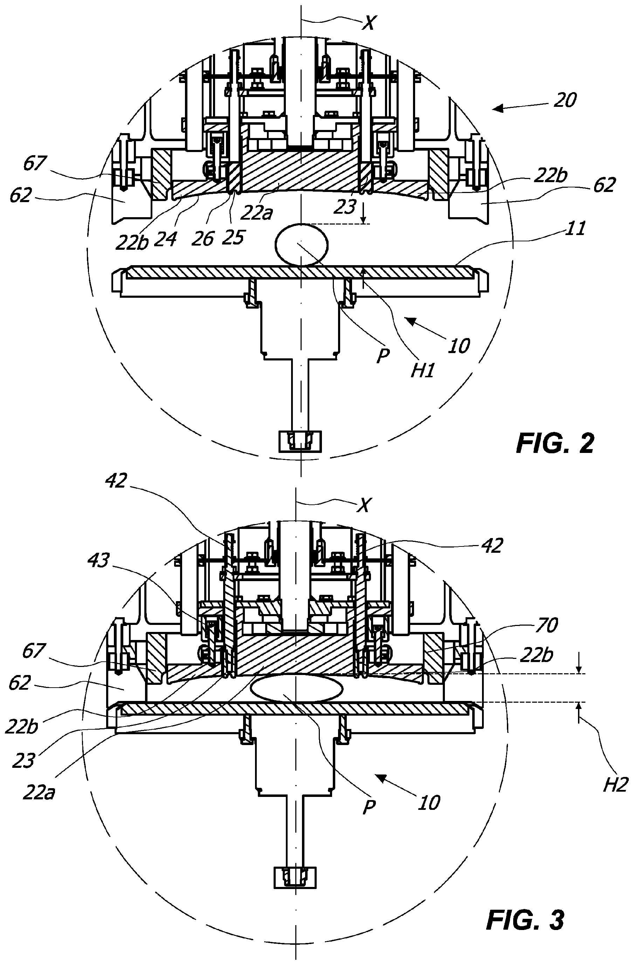

Therefore, as for example shown in FIG. 2, the portion **P** of food dough to be formed may be placed between the upper surface **11** of the base member **10** and the lower surface **21** of the working member **20** in correspondence with the axis **X.**

Although the present description refers to a single base member **10** and working member **20,** it is understood that the apparatus **1** may include a plurality of base members, each one with its relative working member, without departing from the scope of the appended claims.

Similarly, although in the present description the base member **10** is fixed and the working member **20** is movable, it is understood that the opposite may also occur, or that both the base **10** and the working **20** members are reciprocally movable, without departing from the scope of the appended claims.

Suitably, in the embodiment described herein the base member **10** may be arranged below the working member **20.** It is understood that the base member **10** and the working member **20** may also be in respectively inverted position, without departing from the scope of the appended claims.

The positioning of the portion **P** of food dough on the upper surface **11** of the base member **10** may occur by means of suitable automated means, for example one or more conveyor belts.

Furthermore, the apparatus **1** may comprise first actuating means **31,** for example a first electric or hydraulic motor **M1**, acting upon the working member **20** to move its lower surface **21** with respect to the upper surface **11** between a rest position and one or more working positions.

In the rest position the upper **11** and lower **21** surfaces are spaced apart, so as to allow the positioning of the portion **P** of food dough.

Whereas, in the working positions the upper **11** and lower **21** surfaces are close to each other, so as to reciprocally cooperate to form the disk-shaped element **D** of food dough.

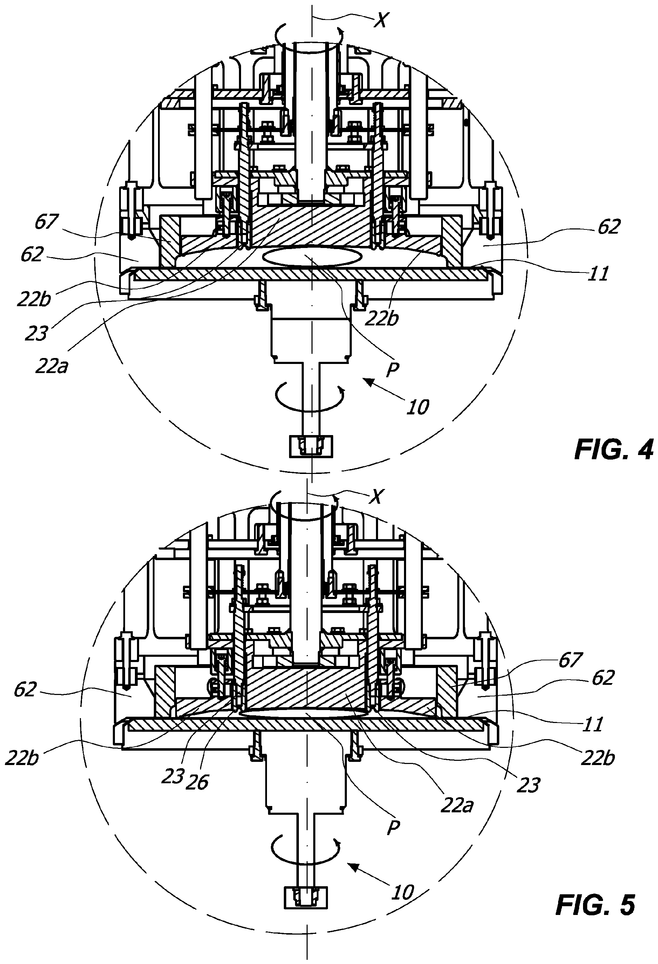

Suitably, thanks to the first actuating means **31,** the lower surface **21** may move towards the upper surface **11** along a direction coincident with the longitudinal axis **X** between the rest position, shown for example in FIG. 2, and a first working position, shown for example in FIG. 4, wherein the lower surface **21** may come in contact engage with the portion **P** of food dough laying lightly thereto, so as to slightly thin it.

In particular, the lower surface **21** may move the portion **P** of food dough at a height **H2** slightly lower than the original height **H1** of the portion **P** of food dough, for example thinning it for few millimetres.

The upper surface **11** of the base member **10** may be substantially flat or in the shape of an inverted cone to allow a better centring of the portion **P** of food dough.

On the other hand, the lower surface **21** of the working member **20** may have a curved profile with concavity facing upwards, so as to guide the portion **P** of food dough during the forming.

Advantageously, the apparatus **1** may further comprise second actuating means **32,** for example a second motor **M2,** acting upon the base member **10** and upon the working member **20** for rotating the upper surface **11** and the lower surface **21** around the axis **X.**

The second actuating means **32** may act upon the upper **11** and lower **21** surfaces to synchronously rotate them once they reach the first working position, shown in FIG. 4.

Advantageously, the second actuating means **32** may be set so as that the upper surface **11** of the base member **10** and the lower surface **21** of the working member **20** rotate with the same speed and the same direction.

In this way, it is possible to spread the portion **P** of food dough exclusively by means of the centrifugal force resulting from the rotation of the upper **11** and lower **21** surfaces.

In this way, the portion **P** of food dough is not subjected to mechanical stress during the forming, so as the final disk-shaped element **D** maintains its natural softness. This allows to obtain a very desirable and digestible final product.

It is understood that although the present description refers to actuating means "set" to work in the indicated way, that is wherein the working program is predetermined and fixed, the actuating means according to the present invention may also be "settable" time after time without departing from the scope of the appended claims.

To the object, in a *per se* known manner, for instance it may be provided a microprocessor unit, such as a PLC, operatively connected to the actuating elements to allow an operator to vary the behaviour of the actuating means thereof, for example to vary according to the need the reciprocal movement of the upper **11** and lower **21** surfaces during the rotation.

Advantageously, the apparatus **1** may comprise third actuating means **33** on the working member **20** to selectively move closer and / or move away the upper **11** and lower **21** surfaces during the rotation.

It is understood that the second actuating means may further act upon only one of the base member **10** and the working member **20,** the other member being conducted, as well as the third actuating means may act upon the base member **10** or upon both the latter and the working member **20,** without departing from the scope of the appended claims.

Furthermore, it is understood that the first and / or second and / or third actuating means may coincide with each other without departing from the scope of the appended claims. For example, the first and third actuating means **31, 33** may coincide with each other and comprise a single motor set to firstly move closer the upper **11** and lower **21** surfaces when they are stationary and, subsequently, to selectively move closer / move away the same once they are in rotation.

Thanks to the action of the third actuating means **33,** it is possible to vary the reciprocal distance between the upper **11** and lower **21** surfaces to follow the natural behaviour of food dough during the preparing.

In fact, by its nature, the food dough during the rotation tends to thin in a nonlinear manner, but by elastically yielding in a cyclic manner, for example due to friction or to impact of the food dough with a part of the apparatus **1.**

As it is known, the elastic yield tends to slightly increase the height of the portion **P** of food dough. Therefore, during the preparing there are times wherein, for various reasons, the food dough tends to "press" on the upper **11** and lower **21** surfaces to spread in height.

Therefore, the upper **11** and lower **21** surfaces may reciprocally move closer to follow the decrease in height of the portion **P** of food dough during the preparing, and they may space apart to compensate the possible elastic yield thereof, which tends to slightly increase the height of the portion **P** of food dough.

The elastic behaviour of the food dough depends on various factors, such as the composition of the initial dough and / or the processing conditions.

Therefore, the third actuating means **33** may perform such a function in various ways.

In a first embodiment, the third actuating means **33** may be set at the beginning of the processing cycle to vary the reciprocal distance between the upper **11** and lower **21** surfaces in a predetermined and fixed manner for the processing cycle thereto for instance relying on the experience of the operator.

Therefore, the latter through suitable control means may preset the time intervals wherein the upper **11** and lower **21** surfaces may move closer and the ones wherein they need to space apart to compensate for the elastic yield of the food dough.

On the other hand, the third actuating means **33** may automatically vary the reciprocal distance between the upper **11** and lower **21** surfaces.

To the object, suitable sensor means may be provided, for example loading cells or the like, to detect the pressure of the food dough on the upper **11** and lower **21** surfaces.

Then, such sensor means may selectively control the removal of the upper **11** and lower **21** surfaces for values above a determined threshold value, and control the reciprocal approach thereof for values below the threshold value.

In any case, the third actuating means **33** may be set so as to gradually move the upper surface **11** of the base member **10** and the lower surface **21** of the working member **20** during the rotation from the first working position shown for example in FIG. 2 to a second working position wherein the surfaces thereof are closer.

As seen above, during such an approach the third actuating means **33** may control a temporary removal of the above mentioned surfaces to compensate for the elastic yield of the food dough.

According to a further aspect of the invention, the third actuating means **33** may be set in such a manner that during the passage from the first working position to the second working position, the upper **11** and lower **21** surfaces are always in contact engage with the portion **P** of food dough.

This enables to always have friction on the portion **P** of food dough in formation, so as it always perfectly remains in a centred position.

Depending on the composition and on the elasticity of the food dough, during the rotation it may tend to accumulate at certain points. To try to homogenize the distribution of the food dough during the formation, the second actuating means **32** may be set to increase / decrease the speed of rotation of the upper **11** and lower **21** surfaces while the latter pass from the first working position to the second working position.

From the structural point of view, the working member **20** may include a support structure **60** which includes a tubular column **61** extending along the first longitudinal axis **X** and an annular element **62** susceptible to come in contact engage with the base member **10** in the working positions, whose function is better clarified ahead.

For the working connection between the annular element **62** and the tubular column **61,** a disk-shaped plate element **65** may be provided substantially perpendicular to the axis **X.**

The tubular column **61** acts as guide for a series of support columns **63, 64** and **66,** sequentially and telescopically inserted into the tubular column **61.** The contact between the annular element **62** and the base member **10** gives stability to the guide column **61,** besides allowing the reciprocal centring between the upper **21** and lower **11** surfaces.

The column **66** acts as support for an annular element **67,** which may be operatively connected to the former by a respective disk-shaped plate element **68** parallel to the disk-shaped plate element **65.**

Advantageously, the annular element **67** may have an annular cavity **69.**

The annular element **67** may be in contact engage with the base member when the upper **21** and lower **11** surfaces are in the first working position, as shown in FIG. 4. In this way, the annular cavity **69** cooperates with the base member **10** to accommodate the food dough in the final part of the forming so as to achieve the crust of the disk-shaped element **D** of food dough, as explained ahead.

The columns **63** and **64,** that may be telescopically inserted in the column **66,** may respectively support an annular element **23** and a disk-shaped element **22,** which may be reciprocally coaxial with the first longitudinal axis **X.**

For the working connection between the columns **63** and **64** and the annular **23** and disk-shaped **22** elements, respective disk-shaped plate elements **70, 71** may be provided, substantially parallel to each other and to the other disk-shaped plate elements **65, 68.**

In particular, the disk-shaped element **22** and the first annular element **23** may include respective working walls **24, 25** reciprocally cooperating to define the lower surface **21** of the working member **20.**

Suitably, the disk-shaped element **22** may have a central annular portion **22a** and a peripheral annular portion **22b,** integrally movable therebetween.

It is understood that the central portion **22a** and the peripheral annular portion **22b** may further be independent elements without departing from the scope of the appended claims.

According to an aspect of the invention, the first annular element **23** may be interposed between the central annular portion **22a** and the peripheral annular portion **22b** of the disk-shaped element **22.**

Advantageously, therefore, the third actuating means **33** may act upon the support columns **63, 64** to independently move the disk-shaped element **22** thereof and the first annular element **23** and, respectively, the working wall **24** of the disk-shaped element **22** and the working wall **25** of the annular element **23.**

During the rotation, the material forming the portion **P** of food dough, as a result of the centrifugal force, tends to move towards the outside. As it is known, as the portion **P** of food dough spreads, the stress on the central part thereof increases with the risk of damage of the disk-shaped element **D** in formation.

Suitably, to avoid this, the third actuating means **33** may be set to move, during the rotation of the upper **11** and lower **21** surfaces respectively of the base member **10** and of the working member **20,** the working wall **25** of the annular element **23** in contact engage with the portion **P** of food dough once the diameter thereof exceeds the diameter of the central annular portion **22a** of the disk-shaped element **22.**

Suitably, the working wall **25** of the first annular element **23** may have at least one projection **26** shaped as a "U" having a concavity facing downwards.

In this way, the projection **26** in contact engage with the portion **P** of food dough "brakes" the displacement towards the outside of the food dough. In practice, the traction of the peripheral part of the disk-shaped element **D** of food dough is distributed over the entire surface of the annular element **23,** decreasing the risk of damage of the central part.

On the other hand, the central annular portion **22a** of the disk-shaped element **22** is susceptible to come in contact engage during the rotation with the portion **P** of food dough before the peripheral annular portion **22b** thereof.

Suitably, the working wall **25** of the annular element **23** is susceptible to come in contact engage during the rotation with the portion **P** of food dough after the peripheral annular portion **22b** of the disk-shaped element **22** and before the peripheral annular portion **22b** thereof.

The portion of food dough may occupy a maximum volume defined on the upper part and below, respectively, by the lower surface **21** of the upper element **20** and by the upper surface **11** of the base member **10** and laterally by the annular element **67** and / or by the one **62.**

Advantageously, therefore, when the food dough is also in contact engage with the annular element **62** or **67,** the latter acts as a calibrator defining the diameter of the base for pizza.

It is clear that whether the annular element **67** intervenes or not during the forming, it is possible to obtain disk-shaped elements **D** of food dough with or without crust.

Advantageously, therefore, depending on the reciprocal position of the disk-shaped element 22 and of the annular elements **62** or **67,** the disk-shaped element **D** of food dough may have a different diameter and / or a different type of edge.

Suitably, the annular element **23** may be assembled on the respective plate element **70** by means of a plurality of columns of connection **41** slidably inserted into respective passing-through holes thereof.

In this way, the annular element **23** upon the contact with the food dough moves upwards, so as to minimize the stress on the food dough thereof.

Similarly, while the central portion **22a** of the disk-shaped element **22** may be rigidly connected to the plate element **71,** the peripheral annular portion **22b** may be slidably connected to the plate element **71** thereof by means of respective columns of connection **42.**

Suitably, both the annular element **23** and the peripheral annular portion **22b** may be assembled on the respective disk-shaped plate elements **70** and **71** by means of springs **43, 44.** The latter may be interposed between the upper portion of the columns of connection **41, 42** and the disk-shaped plate elements **70** and **71** to allow the food dough to lift the annular element **23** and / or the peripheral annular portion **22b** once they lay on the food dough thereof.

Since, as above mentioned, both the annular element **23** and the peripheral annular portion **22b** move continuously along the axis **X,** once one of them or both lay on the food dough the latter reacts, tending to lift upwards the part in contact thereto. In this way, the elastic force of the springs **43, 44** is added to the one of the food dough, thus simplifying for the latter to lift the annular element **23** and / or the peripheral annular portion **22b.**

Operatively, the apparatus **1** may function as follows.

As shown in FIGs. from 2 to 7, after that a portion **P** of food dough is interposed between the upper **11** and lower **21** surfaces, the first actuating means **31** move the lower surface **21** from the rest position to the first working position.

At the same time, the first actuating means move in contact engage with the base member **10,** firstly the outer annular element **62** and then the inner one **67.**

Therefore, the second actuating means **32** rotate the lower **21** and upper **11** surfaces, so that the food dough begins to spread.

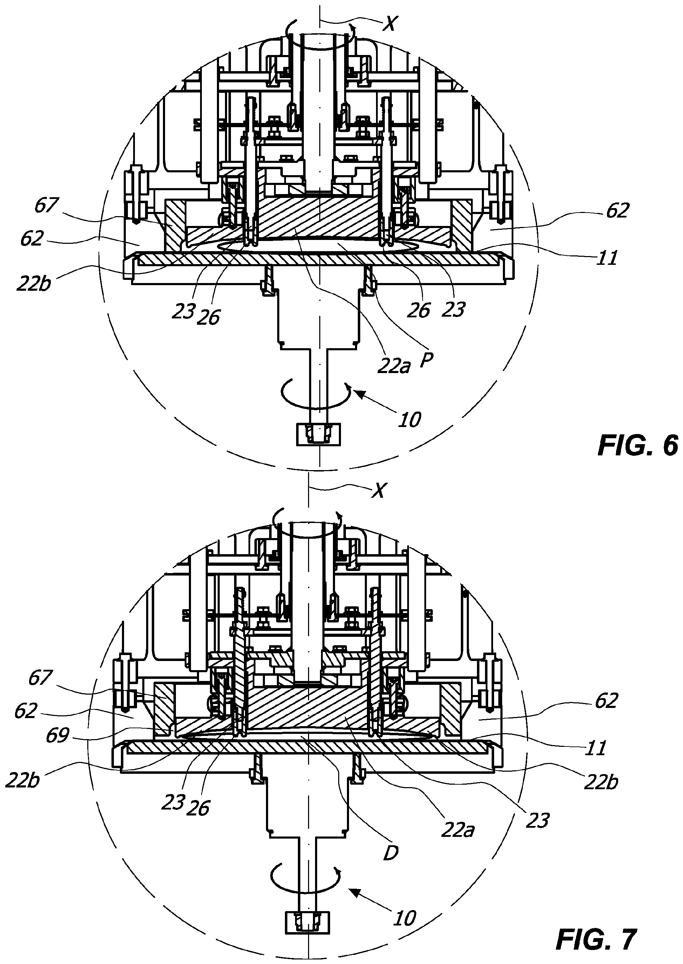

When the food dough exceeds the diameter of the central portion **22a** (FIG. 5), the third actuating means **33** move the wall **25** of the annular element **23** in contact engage with the food dough (FIG. 6).

Once the disk-shaped element **D** has been formed, that is once the surface **21** reaches the second working position, the peripheral portion **22b** of the disk-shaped element **20** lifts integrally with the central portion **22a** to allow the peripheral part of the disk-shaped element **D** to insert into the annular cavity 69 (FIGS. 7 - 8).

In this way, a peripheral portion of food dough is created that, suitably processed, defines the crust of the disk-shaped element **D** of food dough.

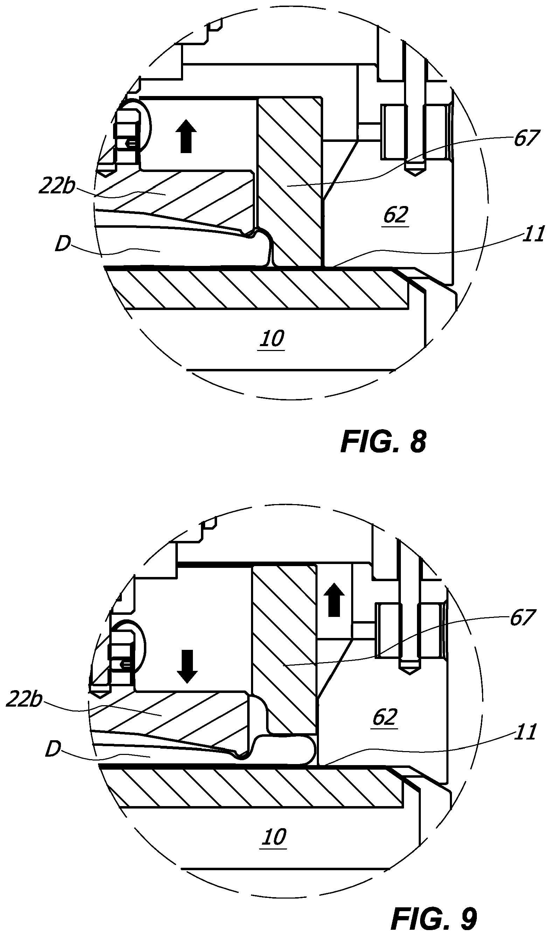

To the object, the annular portion **22b** of the disk-shaped element **22** lowers while the annular element **67** raises, in order to "retain" the peripheral part of the disk-shaped element and thus to create the crust of the disk-shaped element **D** of food dough (FIG. 9). In practice, in such a phase the annular portion **22b** of the disk-shaped element **22** has the same function of the annular element **23** once the portion **P** of food dough exceeds the diameter of the central portion **22a.**

As mentioned above, between the first working position (FIG. 4) and the second working position (FIG. 7) the third actuating means **33** may move away / move closer the lower **11** and upper **21** surfaces to follow the natural behaviour of the food dough.

In the light of what has been said, it is evident that the apparatus **1** fulfils all the intended purposes.

The invention is susceptible of numerous modifications and variations, all falling within the appended claims. All the details may be replaced with other technically equivalent elements, and the materials may be different according to requirements, without departing from the scope of the invention defined by the appended claims.

## Claims

1. An apparatus for forming disk-shaped elements **(D)** of food dough, comprising:
- at least one base member **(10)** having an upper surface **(11)** for supporting a portion **(P)** of food dough to be formed having a first height (**H1**);
- at least one working member **(20)** having a lower surface **(21)** faced to said upper surface **(11)** of said at least one base member **(10);**
- first actuating means **(31)** acting upon at least one of said at least one base member **(10)** and at least one working member **(20)** to reciprocally move the respective upper **(11)** and lower **(21)** surfaces between a reciprocally distal rest position and at least one reciprocally proximal first working position wherein the upper **(11)** and lower **(21)** surfaces thereof reciprocally cooperate to form said portion **(P)** of food dough;
- second actuating means **(32)** acting upon at least one of said at least one base member **(10)** and at least one working member **(20)** to synchronically rotate said upper **(11)** and lower **(21)** surfaces around a longitudinal axis **(X)** once they reach said at least one first working position, so as to promote the spreading of said portion of food dough by means of the centrifugal force resulting from the rotation;
wherein said second actuating means **(32)** are set or settable so as said upper **(11)** and lower **(21)** surfaces rotate with the same speed and the same direction;
**characterized in that** said at least one working member **(20)** comprises a disk-shaped element **(22)** and at least one first annular element **(23)** which are reciprocally coaxial with said first longitudinal axis **(X),** said disk-shaped element **(22)** and at least one first annular element **(23)** including respective working walls **(24, 25)** reciprocally cooperating to define said lower surface **(21),** said disk-shaped element **(22)** having a central portion **(22a)** and a peripheral annular portion **(22b)** integrally movable to one another, said at least one first annular element **(23)** being interposed between said central **(22a)** and peripheral **(22b)** portions of said disk-shaped element **(22).**

2. Apparatus according to claim 1, wherein said first actuating means **(31)** are set or settable so as in said at least one first working position said upper **(11)** and lower **(21)** surfaces are both in contact engage with the portion of food dough to move it to a second height **(H2)** slightly lower than the first height (**H1**).

3. Apparatus according to claim 1 or 2, wherein said lower surface **(21)** of said at least one working member **(20)** has a substantially curved profile with concavity facing upwards.

4. Apparatus according to claim 1, 2 or 3, further comprising third actuating means **(33)** acting upon at least one of said at least one base member **(10)** and at least one working member **(20)** to progressively move said upper **(11)** and lower **(21)** surfaces during the rotation from said at least one first working position to a second working position in which they are mutually closer.

5. Apparatus according to the preceding claim, wherein said third actuating means **(33)** are set or settable to selectively move closer/ move away said upper **(11)** and lower **(21)** surfaces during the rotation, so as to follow the natural spreading of the portion of food dough compensating the elastic yield thereof.

6. Apparatus according to claim 5, wherein at least one of said upper **(11)** and lower **(21)** surfaces includes sensor means to detect the pressure of the food dough thereon, said third actuating means **(33)** being settable to automatically move away said upper **(11)** and lower **(21)** surfaces during the rotation in case said sensor means detect a pressure greater than a threshold value, said third actuating means **(33)** being settable to gradually move closer said upper **(11)** and lower **(21)** surfaces during the rotation in case said sensor means detect a pressure lower than the threshold value.

7. Apparatus according to claim 5 or 6, wherein said second actuating means **(32)** are set or settable to increase / decrease the speed of rotation of said upper **(11)** and lower **(21)** surfaces while the latter pass from said at least one first working position to said second working position, so as to homogenize the distribution of the mass of the portion **(P)** of food dough during the formation.

8. Apparatus according to claim 5, 6 or 7, wherein said third actuating means **(33)** are set or settable so as during the passage from said at least one first working position to said second working position said upper **(11)** and lower **(21)** surfaces are always in contact engage with said food dough.

9. Apparatus according to any one of the preceding claims, wherein said third actuating means **(33)** act independently upon said disk-shaped element **(22)** and at least one first annular element **(23),** said third actuating means **(33)** being set or settable to move during the rotation the working wall **(25)** of said at least one first annular element **(23)** in contact engage with the portion of the food dough once the diameter thereof exceeds the diameter of the central portion **(22a)** of said disk-shaped element **(22),** so as to locally retain the portion **(P)** of food dough avoiding the centrifugal force damaging the central part thereof.

## Patentansprüche

1. Vorrichtung zum Formen von scheibenförmigen Elementen (D)
aus Teig, die Folgendes umfasst:
- mindestens ein Basiselement (10) mit einer oberen Fläche (11) zum Halten einer zu formenden Portion (P) Teig mit einer ersten Höhe (H1),
- mindestens ein Arbeitselement (20) mit einer der oberen Fläche (11) des mindestens einen Basiselements (10) gegenüberliegenden unteren Fläche (21),
- erste Betätigungsmittel (31), die so auf das mindestens eine Basiselement (10) oder/und das mindestens eine Arbeitselement (20) einwirken, dass die obere (11) beziehungsweise die untere (21) Fläche zwischen einer zueinander distalen Ruheposition und mindestens einer zueinander proximalen ersten Arbeitsposition zueinander bewegt werden, wobei die obere (11) und die untere (21) Fläche davon miteinander zusammenwirken und die Portion (P) Teig formen,
- zweite Betätigungsmittel (32), die so auf das mindestens eine Basiselement (10) oder/und das mindestens eine Arbeitselement (20) einwirken, dass die obere (11) und die untere (21) Fläche gleichzeitig um eine Längsachse (X) gedreht werden, wenn sie die mindestens eine erste Arbeitsposition erreicht haben, so dass das Verteilen der Portion Teig mithilfe der durch das Drehen bewirkten Zentrifugalkraft begünstigt wird,
wobei die zweiten Betätigungsmittel (32) so eingestellt oder einstellbar sind, dass sich die obere (11) und die untere (21) Fläche mit der gleichen Geschwindigkeit und in der gleichen Richtung drehen,
**dadurch gekennzeichnet, dass** das mindestens eine Arbeitselement (20) ein scheibenförmiges Element (22) und mindestens ein erstes ringförmiges Element (23) umfasst, die miteinander koaxial mit der ersten Längsachse (X) verlaufen, wobei das scheibenförmige Element (22) und das mindestens eine erste ringförmige Element (23) jeweils Arbeitswände (24, 25) aufweisen, die miteinander zusammenwirken und die untere Fläche (21) definieren, wobei das scheibenförmige Element (22) einen mittleren Abschnitt (22a) und einen ringförmigen Umfangsabschnitt (22b) aufweist, die zueinander bewegbar sind, wobei das mindestens eine erste ringförmige Element (23) zwischen dem mittleren (22a) und dem Umfangsabschnitt (22b) des scheibenförmigen Elements (22) angeordnet ist.

2. Vorrichtung nach Anspruch 1, wobei die ersten Betätigungsmittel (31) so eingestellt oder einstellbar sind, dass in der mindestens einen ersten Arbeitsposition die obere (11) und die untere (21) Fläche beide die Portion Teig berühren und diese auf eine zweite Höhe (H2) bringen, die etwas geringer ist als die erste Höhe (H1).

3. Vorrichtung nach Anspruch 1 oder 2, wobei die untere Fläche (21) des mindestens einen Arbeitselements (20) ein im Wesentlichen gekrümmtes Profil mit nach oben gerichteter Konkavität aufweist.

4. Vorrichtung nach Anspruch 1, 2 oder 3, die ferner dritte Betätigungsmittel (33) umfasst, die auf das mindestens eine Basiselement (10) oder/und das mindestens eine Arbeitselement (20) einwirken und die obere (11) und die untere (21) Fläche beim Drehen aus der mindestens einen ersten Arbeitsposition allmählich in eine zweite Arbeitsposition bringen, in der sie näher beieinander liegen.

5. Vorrichtung nach dem vorhergehenden Anspruch, wobei die dritten Betätigungsmittel (33) so eingestellt oder einstellbar sind, dass sie die obere (11) und die untere (21) Fläche beim Drehen näher zusammen/weiter auseinander bewegen, so dass diese der natürlichen Verteilung der Portion Teig unter Ausgleich seiner Elastizität folgen.

6. Vorrichtung nach Anspruch 5, wobei zumindest die obere (11) oder die untere (21) Fläche Sensormittel aufweist, die den Druck des Teigs darauf erkennen, wobei die dritten Betätigungsmittel (33) so einstellbar sind, dass sie beim Drehen in dem Fall, dass die Sensormittel einen über einem Schwellwert liegenden Druck erkennen, die obere (11) und die untere (21) Fläche automatisch auseinander bewegen, wobei die dritten Betätigungsmittel (33) so einstellbar sind, dass sie beim Drehen in dem Fall, dass die Sensormittel einen unter dem Schwellwert liegenden Druck erkennen, die obere (11) und die untere (21) Fläche allmählich weiter zusammenbewegen.

7. Vorrichtung nach Anspruch 5 oder 6, wobei die zweiten Betätigungsmittel (32) so eingestellt oder einstellbar sind, dass sie die Drehzahl der oberen (11) und der unteren (21) Fläche erhöhen/verringern, wenn sich diese aus der mindestens einen ersten Arbeitsposition in die zweite Arbeitsposition bewegen, so dass die Verteilung der Masse der Portion (P) Teig beim Fomen gleichmäßig ist.

8. Vorrichtung nach Anspruch 5, 6 oder 7, wobei die dritten Betätigungsmittel (33) so eingestellt oder einstellbar sind, dass die obere (11) und die untere (21) Fläche beim Bewegen aus der mindestens einen ersten Arbeitsposition in die zweite Arbeitsposition stets die Portion Teig berühren.

9. Vorrichtung nach einem der vorhergehenden Ansprüche, wobei die dritten Betätigungsmittel (33) unabhängig auf das scheibenförmige Element (22) und mindestens ein ringförmiges Element (23) einwirken, wobei die dritten Betätigungsmittel (33) so eingestellt oder einstellbar sind, dass sie die Arbeitswand (25) des mindestens einen ersten ringförmigen Elements (23) beim Drehen mit der Portion Teig in Kontakt bringen, wenn deren Durchmesser den Durchmesser des mittleren Abschnitts (22a) des scheibenförmigen Elements (22) übersteigt, so dass die Portion (P) Teig lokal festgehalten und verhindert wird, dass die Zentrifugalkraft den mittleren Teil davon beschädigt.

## Revendications

1. Appareil pour former des éléments en forme de disque (D) de pâte alimentaire, comprenant :
- au moins un organe de base (10) possédant une surface supérieure (11) pour supporter une portion (P) de pâte alimentaire destinée à être formée possédant une première hauteur (H1) ;
- au moins un organe de fonctionnement (20) possédant une surface inférieure (21) faisant face à ladite surface supérieure (11) dudit au moins un organe de base (10) ;
- des premiers moyens d'actionnement (31) agissant sur au moins un parmi lesdits au moins un organe de base (10) et au moins un organe de fonctionnement (20) pour déplacer en va-et-vient les surfaces supérieure (11) et inférieure (21) respectives entre une position de repos réciproquement distale et au moins une première position de fonctionnement réciproquement proximale dans laquelle les surfaces supérieure (11) et inférieure (21) de ceux-ci coopèrent réciproquement pour former ladite portion (P) de pâte alimentaire ;
- des deuxièmes moyens d'actionnement (32) agissant sur au moins un parmi lesdits au moins un organe de base (10) et au moins un organe de fonctionnement (20) pour mettre en rotation de façon synchrone lesdites surfaces supérieure (11) et inférieure (21) autour d'un axe longitudinal (X) une fois qu'elles atteignent ladite au moins une première position de fonctionnement, afin de favoriser l'étalement de ladite portion de pâte alimentaire au moyen de la force centrifuge résultant de la rotation ;
dans lequel lesdits deuxièmes moyens d'actionnement (32) sont réglés ou réglables pour que lesdites surfaces supérieure (11) et inférieure (21) entrent en rotation avec la même vitesse et la même direction ;
**caractérisé en ce que** ledit au moins un organe de fonctionnement (20) comprend un élément en forme de disque (22) et au moins un premier élément annulaire (23) qui sont réciproquement coaxiaux avec ledit premier axe longitudinal (X), lesdits élément en forme de disque (22) et au moins un premier élément annulaire (23) incluant des parois de fonctionnement respectives (24, 25) coopérant réciproquement pour définir ladite surface inférieure (21), ledit élément en forme de disque (22) possédant une portion centrale (22a) et une portion annulaire périphérique (22b) mobiles de façon monobloc l'une par rapport à l'autre, ledit au moins un premier élément annulaire (23) étant interposé entre lesdites portions centrale (22a) et périphérique (22b) dudit élément en forme de disque (22).

2. Appareil selon la revendication 1, dans lequel lesdits premiers moyens d'actionnement (31) sont réglés ou réglables pour que, dans ladite au moins une première position de fonctionnement, lesdites surfaces supérieure (11) et inférieure (21) soient toutes les deux en prise de contact avec la portion de pâte alimentaire pour la déplacer vers une seconde hauteur (H2) légèrement inférieure à la première hauteur (H1).

3. Appareil selon la revendication 1 ou 2, dans lequel ladite surface inférieure (21) dudit au moins un organe de fonctionnement (20) présente un profil sensiblement incurvé avec une concavité orientée vers le haut.

4. Appareil selon la revendication 1, 2 ou 3, comprenant en outre des troisièmes moyens d'actionnement (33) agissant sur au moins l'un parmi lesdits au moins un organe de base (10) et au moins un organe de fonctionnement (20) pour progressivement déplacer lesdites surfaces supérieure (11) et inférieure (21) durant la rotation, de ladite au moins une première position de fonctionnement à une seconde position de fonctionnement dans laquelle elles sont mutuellement plus proches.

5. Appareil selon la revendication précédente, dans lequel lesdits troisièmes moyens d'actionnement (33) sont réglés ou réglables pour sélectivement rapprocher/éloigner lesdites surfaces supérieure (11) et inférieure (21) durant la rotation, afin de suivre l'étalement naturel de la portion de pâte alimentaire, compensant la déformation élastique de celle-ci.

6. Appareil selon la revendication 5, dans lequel au moins l'une desdites surfaces supérieure (11) et inférieure (21) inclut des moyens capteurs pour détecter la pression de la pâte alimentaire sur celle-ci, lesdits troisièmes moyens d'actionnement (33) étant réglables pour automatiquement éloigner lesdites surfaces supérieure (11) et inférieure (21) durant la rotation au cas au lesdits moyens capteurs détectent une pression supérieure à une valeur de seuil, lesdits troisièmes moyens d'actionnement (33) étant réglables pour progressivement rapprocher lesdites surfaces supérieure (11) et inférieure (21) durant la rotation au cas où lesdits moyens capteurs détectent une pression inférieure à la valeur de seuil.

7. Appareil selon la revendication 5 ou 6, dans lequel lesdits deuxièmes moyens d'actionnement (32) sont réglés ou réglables pour augmenter / réduire la vitesse de rotation desdites surfaces supérieure (11) et inférieure (21) alors que ces dernières passent de ladite au moins une première position de fonctionnement à ladite seconde position de fonctionnement, afin d'homogénéiser la distribution de la masse de la portion (P) de pâte alimentaire durant la formation.

8. Appareil selon la revendication 5, 6 ou 7, dans lequel lesdits troisièmes moyens d'actionnement (33) sont réglés ou réglables pour que, durant le passage de ladite au moins une première position de fonctionnement à ladite seconde position de fonctionnement lesdites surfaces supérieure (11) et inférieure (21) soient toujours en prise de contact avec ladite pâte alimentaire.

9. Appareil selon l'une quelconque des revendications précédentes, dans lequel lesdits troisièmes moyens d'actionnement (33) agissent indépendamment sur ledit élément en forme de disque (22) et au moins un premier élément annulaire (23), lesdits troisièmes moyens d'actionnement (33) étant réglés ou réglables pour déplacer, durant la rotation, la paroi de fonctionnement (25) dudit au moins un premier élément annulaire (23) en prise de contact avec la portion de la pâte alimentaire une fois que le diamètre de celle-ci excède le diamètre de la portion centrale (22a) dudit élément en forme de disque (22), afin de retenir localement la portion (P) de pâte alimentaire, évitant que la force centrifuge endommage la partie centrale de celle-ci.
